# EUROPÄISCHE PATENTSCHRIFT

(11) **EP 2 046 878 B1**
(45) Veröffentlichungstag und Bekanntmachung des Hinweises auf die Patenterteilung: **30.06.2010**
(21) Anmeldenummer: 07787361.0
(22) Anmeldetag: 11.07.2007
(51) Int. Cl.: C08J 9/42, A47L 9/12

(54) **VERWENDUNG VON MODIFIZIERTEN OFFENZELLIGEN SCHAUMSTOFFEN IN STAUBSAUGERN**
USE OF MODIFIED OPEN-CELL FOAM MATERIALS IN VACUUM CLEANERS
UTILISATION DE MOUSSES À ALVÉOLES OUVERTES MODIFIÉES DANS DES ASPIRATEURS

(30) Priorität: 21.07.2006 DE 102006034315
(43) Veröffentlichungstag der Anmeldung: 15.04.2009
(73) Patentinhaber: BASF SE, 67056 Ludwigshafen (DE)
(72) Erfinder: BAUS, Ulf, 69221 Dossenheim (DE); FRENZEL, Stefan, 68161 Mannheim (DE); VATH, Bernhard, 68259 Mannheim (DE); MÖCK, Christof, 68259 Mannheim (DE); TIEKOETTER, Stefan, 33699 Bielefeld (DE); BERTRAM, Andre, 33739 Bielefeld (DE); KINNIUS, Jörg, 32139 Spenge (DE); WOLF, Cornelius, 33799 Bielefeld (DE)
(86) Internationale Anmeldenummer: PCT/EP2007/057087
(87) Internationale Veröffentlichungsnummer: WO 2008/009602

(56) Entgegenhaltungen:
- WO-A-02/26872
- DE-A1- 4 238 126
- US-A- 3 882 961

## Beschreibung

Die vorliegende Erfindung betrifft die Verwendung von Formkörpern mit Abmessungen Länge·Breite·Höhe jeweils im Bereich von 1 mm bis 5 cm, hergestellt durch Behandeln von
(a) offenzelligem Aminoplastschaumstoff mit einer Dichte im Bereich von 5 bis 500 kg/m³ und einem mittleren Porendurchmesser im Bereich von 1 µm bis 1 mm
(b) mit wässriger Formulierung von mindestens einem kationischen Polymer
(c) und einem formgebenden Schritt,
als Staubbindemittel in Staubsaugern.
Weiterhin betrifft die vorliegende Erfindung die Verwendung von flächigen Formkörpern mit einer Dicke im Bereich von 0,3 bis 2 cm, bevorzugt 0,5 bis 1,5 cm, hergestellt durch Behandeln von
(a) offenzelligem Aminoplastschaumstoff mit einer Dichte im Bereich von 5 bis 500 kg/m³ und einem mittleren Porendurchmesser im Bereich von 1 µm bis 1 mm
(b) mit wässriger Formulierung von mindestens einem kationischen Polymer
(c) und einem formgebenden Schritt,
als Staubbindemittel in Staubsaugern.

Weiterhin betrifft die vorliegende Erfindung Formkörper und ein Verfahren zu ihrer Herstellung. Weiterhin betrifft die vorliegende Erfindung Staubsauger, umfassend erfindungsgemäße Formkörper.

Schaumstoffe, speziell sogenannte offenzellige Schaumstoffe, finden Anwendungen in zahlreichen Anwendungen. Insbesondere offenzellige Schaumstoffe aus synthetischen Materialien haben sich als vielseitig erwiesen. Genannt seien beispielhaft Sitzkissen, Filtermaterialien, Klimaanlagen und Automobilteile, weiterhin Reinigungsmaterialien.

Bei Staubsaugern, insbesondere bei Bodenstaubsaugern, kommen in vielen Fällen Staubrückhaltesysteme zum Einsatz, die zwischen dem Lufteinlass eines Staubsammelraums und der Saugseite eines Gebläses angeordnet sind und den Staub vor dem Eintritt in das Gebläse zurückhalten. Eine besonders bekannte Variante ist ein als Beutel geformter Filter, der innenbeaufschlagt ist, d.h., der Staub lagert sich im Inneren des als Beutel ausgebildeten Filters ab. Derartige Filter müssen regelmäßig ausgetauscht werden. In manchen Staubsaugern, insbesondere in Kleinstsaugern. Mehrzwecksaugern oder Gewerbegeräten, gibt es außenbeaufschlagte Filter, die das Gebläse umgeben. Vorteilhaft daran ist die größere Aufnahmekapazität; nachteilig ist, dass derartige Filter nur für Grobstaub ausgelegt sind und dass Feinstaub, der allergieauslösende Pollen und Mikroorganismen beinhalten kann, den betreffenden Filter passiert und vom Gebläse in den zu saugenden Raum zurückgeblasen und dabei sogar aufgewirbelt wird.

Neben den oben beschriebenen Staubsaugern, die einen Beutel oder eine Tüte aufweisen, kommen sogenannte "Bagless-Staubsauger" zum Einsatz, die ohne Staubbeutel arbeiten. Sie enthalten in der Regel einen Zyklon zur Staubtrennung bzw. Staubvorabscheidung und ein nachgeschaltetes Feinstaubfilter. Bisher bekannte Bagless-Systeme weisen den Nachteil auf, dass beim Entleeren des Zyklons - meistens geschieht dies über eine Klappe am Boden des Staubsammelgefäßes - eine Staubwolke entsteht, die diesem System einen unhygienischen Aspekt geben.

Es bestand die Aufgabe, ein Staubbindemittel bereit zu stellen, das in besonderer Weise für den Einsatz in Staubsaugern geeignet ist, das beispielsweise eine hohe Staubspeicherkapazität hat, eine hygienisch einwandfreie Anordnung aufweist und das die Fähigkeit hat, Feinstaub zu binden. Weiterhin bestand die Aufgabe, ein Verfahren zur Herstellung von erfindungsgemäßen Staubbindemitteln bereit zu stellen.

Dementsprechend wurde die eingangs definierte Verwendung von Formkörpern gefunden.

Erfindungsgemäß verwendet man Formkörper mit Abmessungen Länge·Breite·Höhe jeweils im Bereich von 1 mm bis 5 cm, hergestellt durch Behandeln von
(a) offenzelligem Aminoplastschaumstoff mit einer Dichte im Bereich von 5 bis 500 kg/m³ und einem mittleren Porendurchmesser im Bereich von 1 µm bis 1 mm
(b) mit wässriger Formulierung von mindestens einem kationischen Polymer
(c) und einem formgebenden Schritt,
als Staubbindemittel in Staubsaugern.

Man kann erfindungsgemäß flächige Formkörper mit einer Dicke im Bereich von 0,3 bis 2 cm, bevorzugt 0,5 bis 1,5 cm, hergestellt durch Behandeln von
(a) offenzelligem Aminoplastschaumstoff mit einer Dichte im Bereich von 5 bis 500 kg/m³ und einem mittleren Porendurchmesser im Bereich von 1 µm bis 1 mm
(b) mit wässriger Formulierung von mindestens einem kationischen Polymer
(c) und einem formgebenden Schritt,
als Staubbindemittel in Staubsaugern verwenden.

Im Rahmen der vorliegenden Erfindung kann dabei wässrige Formulierung für Lösungen, Emulsionen oder Dispersionen stehen.

Erfindungsgemäß verwendete Formkörper haben Abmessungen von Länge·Breite·Höhe jeweils im Bereich von 1 mm bis 5 cm, bevorzugt bis 3 cm.

In einer Ausführungsform der vorliegenden Erfindung ist mindestens eine Dimension, d.h. Länge oder Breite oder Höhe, größer ist als 5 mm, aber maximal 5 cm, bevorzugt maximal 3 cm. Es können auch mindestens zwei oder alle drei Dimensionen größer sein als 5,5 mm und maximal 5 cm, bevorzugt maximal 3 cm. In einer anderen Ausführungsform der vorliegenden Erfindung sind alle drei Dimensionen von erfindungsgemäßen Formkörpern im Bereich von 1 mm bis 5 mm.

In einer Ausführungsform der vorliegenden Erfindung sind erfindungsgemäße Formkörper ausgebildet als Zylinder, quadratische Säulen, Sattelkörper, Kugeln, Flocken, Granulat, Quader, Würfel, bevorzugt in Form von Tabletten oder Scheiben (Pellets), aber auch als Sterne, Buchstaben, igelförmige oder Hohlräume enthaltende Formkörper.

In einer anderen Ausführungsform der vorliegenden Erfindung sind erfindungsgemäße Formkörper flächig ausgestaltet, mit einer Dicke im Bereich von 0,3 bis 2 cm, bevorzugt 0,5 bis 1,5 cm. Dabei sind Länge und Breite vorzugsweise deutlich größer als die Dicke, beispielsweise jeweils fünfmal so groß, bevorzugt mindestens zehnmal so groß. Länge und Breite können gleich oder verschieden groß sein.

In der letztgenannten Ausführungsform sind erfindungsgemäße flächige Formkörper beispielsweise als Matte, als Vlies oder als Tuch ausgestaltet.

In einer Ausführungsform der vorliegenden Erfindung sind die erfindungsgemäß verwendeten Formkörper ungefähr gleich groß, das heißt, die Abmessungen können um bis zu ± 10% variieren.

Zur Herstellung von erfindungsgemäß verwendeten Formkörpern geht man von offenzelligem Schaumstoff aus.

In einer Ausführungsform der vorliegenden Erfindung handelt es sich bei erfindungsgemäß verwendeten offenzelligen Schaumstoffen um solche auf Basis Aminoplastschaumstoffen, beispielsweise aus Harnstoff-Formaldehyd-Harzen, insbesondere Schaumstoffen auf Basis von Aminoplast--Formaldehyd-Harzen, insbesondere Melamin-Formaldehyd-Harzen, wobei Schaumstoffe auf Basis von Melamin-Formaldehyd-Harzen im Rahmen der vorliegenden Erfindung auch als Melamin-Schaumstoffe bezeichnet werden.

Darunter ist zu verstehen, dass man erfindungsgemäß verwendete Formkörper aus offenzelligen Schaumstoffen herstellt, die Aminoplastschaumstoffe umfassen, insbesondere Melamin-Schaumstoffe.

Die zur Herstellung von erfindungsgemäßen Formkörpern eingesetzten unmodifizierten offenzelligen Schaumstoffe (a) werden im Rahmen der vorliegenden Erfindung ganz allgemein auch als unmodifizierte Schaumstoffe (a) bezeichnet. Die zur Ausübung des erfindungsgemäßen Verfahrens eingesetzten unmodifizierten offenzelligen Schaumstoffe (a) werden im Folgenden näher beschrieben.

Zur Ausübung des erfindungsgemäßen Herstellverfahrens geht man aus von offenzelligen Schaumstoffen (a), insbesondere von Schaumstoffen, in denen mindestens 50% aller Lamellen offen sind, bevorzugt 60 bis 100% und besonders bevorzugt 65 bis 99,9%, bestimmt nach DIN ISO 4590.

Als Ausgangsmaterial eingesetzte Schaumstoffe (a) sind vorzugsweise harte Schaumstoffe, das sind im Sinne der vorliegenden Erfindung Schaumstoffe, die bei einer Stauchung von 40% eine Stauchhärte von 1 kPa oder mehr aufweisen, bestimmt nach DIN 53577.

Als Ausgangsmaterial eingesetzte Schaumstoffe (a) haben eine Dichte im Bereich von 3 bis 500 kg/m³, bevorzugt 6 bis 300 kg/m³ und besonders bevorzugt im Bereich von 7 bis 300 kg/m³.

Als Ausgangsmaterial eingesetzte offenzellige Schaumstoffe (a) können einen mittleren Porendurchmesser (Zahlenmittel) im Bereich von 1 µm bis 1 mm aufweisen, bevorzugt 50 bis 500 µm, bestimmt durch Auswertung mikroskopischer Aufnahmen an Schnitten.

In einer Ausführungsform der vorliegenden Erfindung können als Ausgangsmaterial eingesetzte offenzellige Schaumstoffe (a) maximal 20, bevorzugt maximal 15 und besonders bevorzugt maximal 10 Poren pro m² aufweisen, die einen Durchmesser im Bereich von bis zu 20 mm haben. Die übrigen Poren haben üblicherweise einen geringeren Durchmesser.

In einer Ausführungsform der vorliegenden Erfindung weisen als Ausgangsmaterial eingesetzte offenzellige Schaumstoffe (a) eine BET-Oberfläche im Bereich von 0,1 bis 50 m²/g auf, bevorzugt 0,5 bis 20 m²/g, bestimmt nach DIN 66131.

Als Ausgangsmaterial zur Durchführung des erfindungsgemäßen Herstellverfahrens besonders geeignete Melamin-Schaumstoffe sind als solche bekannt. Ihre Herstellung gelingt beispielsweise durch Verschäumung von
i) einem Melamin-Formaldehyd-Vorkondensat, das neben Formaldehyd weitere Carbonylverbindungen wie beispielsweise Aldehyde einkondensiert enthalten können,
ii) ein oder mehrere Treibmittel,
iii) einen oder mehrere Emulgatoren,
iv) einen oder mehrere Härter.

Melamin-Formaldehyd-Vorkondensate i) können unmodifiziert sein, sie können aber auch modifiziert sein, beispielsweise können bis zu 20 mol-% des Melamins durch andere an sich bekannte Duroplastbildner ersetzt sein, beispielsweise alkylsubstituiertes Melamin, Harnstoff, Urethan, Carbonsäureamide, Dicyandiamid, Guanidin, Sulfurylamid, Sulfonsäureamide, aliphatische Amine, Phenol und Phenolderivate. Als weitere Carbonylverbindungen neben Formaldehyd können modifizierte Melamin-Formaldehyd-Vorkondensate beispielsweise Acetaldehyd, Trimethylolacetaldehyd, Acrolein, Furfurol, Glyoxal, Phthaldialdehyd und Terephthaldialdehyd einkondensiert enthalten.

Als Treibmittel ii) sind geeignet: Wasser, inerte Gase, insbesondere Kohlendioxid, und sogenannte physikalische Treibmittel. Bei physikalischen Treibmitteln handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 110°C, insbesondere unter 80 °C. Zu den physikalischen Treibmitteln zählen auch inerte Gase, die in die Einsatzkomponenten i) und ii) eingebracht bzw. in ihnen gelöst werden, beispielsweise Kohlendioxid, Stickstoff oder Edelgase.

Geeignete bei Raumtemperatur flüssigen Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt: Propan, n-Butan, iso- und Cyclobutan , n-, iso- und Cyclopentan, Cyclohexan, Dimethylether, Methylethylether, Methyl-tert.-butylether, Ameisensäuremethylester, Aceton sowie fluorierte Alkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, 1,1,1-Trifluor-2,2,2-trichlorethan, 1,1,2-Trifluor-1,2,2-trichlorethan, Difluorethane und Heptafluorpropan. Die genannten physikalischen Treibmittel können allein oder in beliebigen Kombinationen untereinander eingesetzt werden.

Der Einsatz von Perfluoralkanen zur Erzeugung offener Zellen ist aus EP-A 0 351 614 bekannt.

Als Emulgatoren iii) kann man übliche nicht-ionogene, anionische, kationische oder betainische Tenside einsetzen, insbesondere C₁₂-C₃₀-Alkylsulfonate, bevorzugt C₁₂-C₁₈-Alkylsulfonate und mehrfach ethoxylierte C₁₀-C₂₀-Alkylalkohole, insbesondere der Formel R¹-O(CH₂-CH₂-O)_{y}-H, wobei R¹ gewählt wird aus C₁₀-C₂₀-Alkyl und y beispielsweise eine ganze Zahl im Bereich von 5 bis 100 bedeuten kann.

Als Härter iv) kommen insbesondere saure Verbindungen in Frage, wie beispielsweise anorganische Br⌀nstedsäuren, z.B. Schwefelsäure oder Phosphorsäure, organische Br⌀nstedsäuren wie beispielsweise Essigsäure oder Ameisensäure, Lewissäuren und auch sogenannte latente Säuren.

Beispiele für geeignete Melamin-Schaumstoffe finden sich in EP-A 0 017 672.

Natürlich können als Ausgangsmaterial eingesetzte Schaumstoffe (a) Additive und Zuschlagstoffe enthalten, die in der Schaumstoffchemie üblich sind, beispielsweise Antioxidantien, Flammschutzmittel, Füllstoffe, Farbmittel wie beispielsweise Pigmente oder Farbstoffe und Biozide, beispielsweise

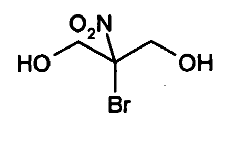

Weiterhin geht man zur Ausübung der vorliegenden Erfindung von mindestens einem kationischen Polymer aus, das im Folgenden auch als kationisches Polymer (b) bezeichnet wird.

Unter kationischen Polymeren (b) werden im Rahmen der vorliegenden Erfindung natürliche und vorzugsweise synthetische Homo- und Copolymere verstanden, die pro Polymermolekül im Mittel (Zahlenmittel) mindestens ein Monomer einpolymerisiert enthalten, das bei einem pH-Wert im Bereich von 0 bis 6, bevorzugt bis 5 eine kovalent an das Polymermolekül gebundene Gruppe mit positiver Ladung trägt. Zu nennen sind beispielsweise quartäre Phosphoniumsalze und quartäre, bevorzugt tertiäre, sekundäre und insbesondere primäre Aminogruppen.

In einer Ausführungsform der vorliegenden Erfindung hat kationisches Polymer (b) ein mittleres Molekulargewicht M_{w} im Bereich von 500 bis 10.000.000 g/mol, vorzugsweise 10.000 bis 2.000.000 g/mol.

In einer bevorzugten Ausführungsform der vorliegenden Erfindung wählt man kationisches Polymer (b) aus Polyethyleniminen und Polyvinylaminen.

In einer Ausführungsform der vorliegenden Erfindung enthält kationisches Polymer, insbesondere Polyvinylamin, noch ein oder mehrere weitere Comonomere einpolymerisiert, die keine elektrische Ladung tragen. Beispiele sind (Meth)acrylsäure-C₁-C₁₀-alkylester, insbesondere Methylacrylat, Methylmethacrylat, n-Butylacrylat, 2-Ethylhexylacrylat.

In einer anderen Ausführungsform der vorliegenden Erfindung enthält kationisches Polymer (b) ein oder mehrere weitere Comonomere einpolymerisiert, die bei einem pH-Wert im Bereich von 0 bis 6, bevorzugt bis 5 eine kovalent an das Polymermolekül gebundene Gruppe mit positiver Ladung tragen. Beispiele sind N-Vinylimidazol, Diallyldi-C₁-C₄-alkylammonium, insbesondere Diallyldimethylammonium, ω-N,N-Di-C₁-C₄-alkyl-C₂-C₄-alkyl(meth)acrylamid, insbesondere 2-(N,N-Di-methyl)-ethyl(meth)acrylamid, oder ω-N,N-Di-C₁-C₄-alkyl-C₂-C₄-alkyl(meth)acrylat, insbesondere 2-(N,N-Di-methyl)-ethyl(meth)acrylat, jeweils neutralisiert mit beispielsweise Halogenid, insbesondere Chlorid, oder Hydrogensulfat oder Sulfat.

In einer weiteren Ausführungsform der vorliegenden Erfindung handelt es sich bei Polyethylenimin und Polyvinylamin jeweils um Homopolymere.

Kationisches Polymer (b) kann dann, wenn es mindestens eine tertiäre, sekundäre oder primäre Aminogruppe pro Molekül trägt, in mit Säure, insbesondere in mit organischer Säure oder mit Mineralsäure neutralisierter Form vorliegen. Falls kationisches Polymer (b) im Mittel mehr als eine tertiäre, sekundäre oder primäre Aminogruppe pro Molekül trägt, kann kationisches Polymer (b) in partiell oder vorzugsweise vollständig mit Säure, insbesondere in mit organischer Säure oder mit Mineralsäure neutralisierter Form vorliegen. Geeignete organische Säuren sind beispielsweise Sulfonsäuren beispielsweise α- oder β-Naphthalinsulfonsäure, und Carbonsäuren, aliphatisch oder aromatisch, beispielsweise Essigsäure oder Stearinsäure, Benzoesäure oder Terephthalsäure, oder Mineralsäuren wie beispielsweise Schwefelsäure oder Salzsäure.

Kationisches Polymer (b) kann hydrophil mit Alkylenoxid, insbesondere mit Ethylenoxid modifiziert sein. Pro tertiärer Amingruppe können 1 bis 20 mol Alkylenoxid, insbesondere Ethylenoxid, besonders bevorzugt 1 bis 4 mol Ethylenoxid aufpolymerisiert werden. Pro sekundärer Amingruppe können 1 bis 40 mol Alkylenoxid, insbesondere Ethylenoxid, besonders bevorzugt 2 bis 30 mol Ethylenoxid aufpolymerisiert werden. Pro primärer Amingruppe können 1 bis 60 mol Alkylenoxid, insbesondere Ethylenoxid, besonders bevorzugt 2 bis 40 mol Ethylenoxid aufpolymerisiert werden.

In einer Ausführungsform der vorliegenden Erfindung enthalten in Schritt (b) eingesetzte wässrige Formulierung im Bereich von 1 bis 60 Gew.-%, bevorzugt 10 bis 40 Gew.-% kationisches Polymer (b).

Um unmodifizierte Schaumstoffe (a) mit kationischem Polymer (b) zu kontaktieren, sind verschiedene Techniken denkbar.

Das Kontaktieren kann man beispielsweise bewerkstelligen durch Eintauchen von unmodifiziertem Schaumstoff (a) in wässrige Formulierung von kationischem Polymer (b), durch Imprägnieren von unmodifiziertem Schaumstoff (a) mit wässriger Formulierung von kationischem Polymer (b), durch Tränken von unmodifiziertem Schaumstoff (a) mit wässriger Formulierung von kationischem Polymer (b), durch unvollständiges oder vorzugsweise vollständiges Besprühen von unmodifiziertem Schaumstoff (a) mit wässriger Formulierung von kationischem Polymer (b), oder durch Aufkalandrieren von wässriger Formulierung von kationischem Polymer (b) auf unmodifizierten Schaumstoff (a).

In einer anderen Ausführungsform der vorliegenden Erfindung geht man zum Kontaktieren so vor, dass man wässrige Formulierung von kationischem Polymer (b) auf unmodifizierten Schaumstoff (a) aufrakelt. Nach Tränken und Besprühen kann zur gleichmäßigen Verteilung der Formulierung und Einstellen der gewünschten Konzentration zwischen mindestens zwei sich beispielsweise drehenden Walzen abgequetscht werden.

In einer Ausführungsform der vorliegenden Erfindung kann man im Anschluss an das Kontaktieren unmodifizierten Schaumstoff (a) und wässrige Formulierung von kationischem Polymer (b) aufeinander einwirken lassen, beispielsweise über einen Zeitraum im Bereich von 0,1 Sekunden bis 24 Stunden, bevorzugt 0,5 Sekunden bis 10 Stunden und besonders bevorzugt 1 Sekunde bis 6 Stunden.

In einer Ausführungsform der vorliegenden Erfindung kontaktiert man unmodifizierten Schaumstoff (a) und wässrige Formulierung von kationischem Polymer (b) bei Temperaturen im Bereich von 0°C bis 250°C, bevorzugt 5°C bis 190°C und besonders bevorzugt 10 bis 165°C.

In einer Ausführungsform der vorliegenden Erfindung kontaktiert man unmodifizierten Schaumstoff (a) und wässrige Formulierung von kationischem Polymer (b) zunächst bei Temperaturen im Bereich von 0°C bis 50°C und ändert danach die Temperatur, beispielsweise erwärmt man auf Temperaturen im Bereich von 60°C bis 250°C, bevorzugt von 65°C bis 180°C.

In einer anderen Ausführungsform der vorliegenden Erfindung kontaktiert man unmodifizierten Schaumstoff (a) und wässrige Formulierung von kationischem Polymer (b) zunächst bei Temperaturen im Bereich von 0°C bis 120°C und ändert danach die Temperatur, beispielsweise erwärmt man auf Temperaturen im Bereich von 30°C bis 250°C, bevorzugt von 125°C bis 200°C.

In einer bevorzugten Ausführungsform der vorliegenden Erfindung wählt man die Mengen der Einsatzstoffe unmodifizierte Schaumstoff (a) und wässriger Formulierung von kationischem Polymer (b) so, dass erfindungsgemäßes Produkt eine deutlich höhere Dichte hat als der betreffende unmodifizierte Schaumstoff (a).

In einer Ausführungsform der vorliegenden Erfindung arbeitet man während des Kontaktierens von unmodifiziertem Schaumstoff (a) mit wässriger Formulierung von kationischem Polymer (b) bei Atmosphärendruck. In einer anderen Ausführungsform der vorliegenden Erfindung arbeitet man zur Durchführung des erfindungsgemäßen Verfahrens unter erhöhtem Druck, beispielsweise bei Drücken im Bereich von 1,1 bar bis 10 bar. In einer anderen Ausführungsform der vorliegenden Erfindung arbeitet man zur Durchführung des erfindungsgemäßen Verfahrens unter erniedrigtem Druck, beispielsweise bei Drücken im Bereich von 0,1 mbar bis 900 mbar, bevorzugt bis 100 mbar.

In einer Ausführungsform der vorliegenden Erfindung kontaktiert man unmodifizierten Schaumstoff (a) mit wässriger Formulierung von kationischem Polymer (b) so, dass Kationisches Polymer (b) möglichst gleichmäßig in allen Dimensionen über unmodifizierten Schaumstoff (a) verteilt wird. Geeignete Methoden sind Methoden mit einem hohen Auftragswirkungsgrad. Beispielhaft seien genannt: vollständiges Tränken, Tauchen, Fluten, Trommeln, Aufspritzen wie z.B. Druckluftspritzen, Airless-Spritzen, weiterhin Hochrotationszerstäubung, Beschichten, Aufrakeln, Aufkalandrieren, Bestreichen, Aufrollen, Aufwischen, Walzen, Schleudern, Zentrifugieren.

In einer anderen Ausführungsform der vorliegenden Erfindung kontaktiert man unmodifizierten Schaumstoff (a) mit wässriger Formulierung von kationischem Polymer (b) so, dass man eine ungleichmäßige Verteilung von wässriger Formulierung von kationischem Polymer (b) auf unmodifizierten Schaumstoff (a) bewirkt. So kann man in einer Ausführungsform der vorliegenden Erfindung beispielsweise unmodifizierten Schaumstoff (a) mit wässriger Formulierung von kationischem Polymer (b) ungleichmäßig besprühen und anschließendes Einwirken lassen. In einer anderen Ausführungsform der vorliegenden Erfindung kann man unmodifizierten Schaumstoff (a) unvollständig mit wässriger Formulierung von kationischem Polymer (b) tränken. In einer anderen Ausführungsform der vorliegenden Erfindung kann man einen Teil von unmodifiziertem Schaumstoff (a) einmal und einen anderen Teil von unmodifiziertem Schaumstoff (a) mindestens zweimal mit wässriger Formulierung von kationischem Polymer (b) kontaktieren. In einer anderen Ausführungsform tränkt man unmodifizierten Schaumstoff (a) mit wässriger Formulierung von kationischem Polymer (b) vollständig und spült die oberste Schicht mit beispielsweise Wasser wieder sauber. Anschließend lässt man einwirken. Dadurch beschichtet man unmodifizierten Schaumstoff (a) im Kern; die äußere Oberfläche bleibt unbeschichtet.

Wenn man unmodifizierten Schaumstoff (a) mit wässriger Formulierung von kationischem Polymer (b) so kontaktiert, dass man eine ungleichmäßige Verteilung wässriger Formulierung von kationischem Polymer (b) auf unmodifiziertem Schaumstoff (a) bewirkt hat, so erreicht man beispielsweise durch Aufeinandereinwirkenlassen über einen Zeitraum von 2 Minuten oder mehr, dass nicht nur die äußerste Schicht von unmodifiziertem Schaumstoff (a) mit wässriger Formulierung von kationischem Polymer (b) kontaktiert wird.

Wenn man unmodifizierten Schaumstoff (a) mit wässriger Formulierung von kationischem Polymer (b) so kontaktiert, dass man eine ungleichmäßige Verteilung von wässriger Formulierung von kationischem Polymer (b) auf unmodifiziertem Schaumstoff (a) bewirkt hat, so kann erfindungsgemäß modifizierter Schaumstoff über seinen Querschnitt uneinheitliche mechanische Eigenschaften aufweisen. So ist es beispielsweise möglich, dass erfindungsgemäß an den Stellen, an denen er mit größeren Anteilen an wässriger Formulierung von kationischem Polymer (b) kontaktiert worden ist, weicher ist als an den Stellen, an denen er mit weniger wässriger Formulierung von kationischem Polymer (b) kontaktiert worden ist.

In einer Ausführungsform der vorliegenden Erfindung kann man eine ungleichmäßige Verteilung der wässrigen Formulierung von kationischem Polymer (b) durch Kalandrieren an perforierten Walzen oder Lochblechen erreichen. Die Ausbildung einer ungleichmäßigen Verteilung von wässriger Formulierung von kationischem Polymer (b) kann man dadurch verstärken, dass man eine Vakuumabsaugung an mindestens einer perforierten Walze bzw. mindestens einem Lochblech durchführt.

In einer speziellen Ausführungsform der vorliegenden Erfindung stellt man nach dem Kontaktieren durch Abquetschen zwischen zwei gegenläufig sich drehenden Walzen auf eine definierte Flottenaufnahme ein, beispielsweise im Bereich von 20 bis 800 Gew.-%, bezogen auf das Gewicht des unmodifizierten Schaumstoffs (a). Die Konzentration von kationischem Polymer (b) in der Formulierung beträgt zwischen 1 und 99 Gew.-%.

In einer Ausführungsform der vorliegenden Erfindung kann man im Anschluss an das Kontaktieren spülen, beispielsweise mit einem oder mehreren Lösungsmitteln und bevorzugt mit Wasser.

In einer Ausführungsform der vorliegenden Erfindung kann man im Anschluss an das Kontaktieren und gegebenenfalls das Spülen trocknen, beispielsweise mechanisch durch z. B. Auswringen oder Kalandrieren, insbesondere durch Abquetschen durch zwei Rollen, oder thermisch, beispielsweise in Mikrowellenöfen, Heißluftgebläsen oder in Trockenschränken, insbesondere Vakuumtrockenschränken, wobei man Trockenschränke beispielsweise bei Temperaturen im Bereich von 30 bis 150°C betreiben kann. Unter Vakuum kann man im Zusammenhang mit Vakuumtrockenschränken einen Druck beispielsweise im Bereich von 0,1 bis 850 mbar verstehen.

Die Zeit, die man für gewünschtenfalls durchgeführte Trockenschritte aufwendet, gehören definitionsgemäß nicht zur Einwirkzeit im Sinne der vorliegenden Erfindung.

In einer Ausführungsform der vorliegenden Erfindung kann man thermisches Trocknen bewerkstelligen durch Erwärmen auf Temperaturen im Bereich von 20°C bis 150°C, beispielsweise über einen Zeitraum von 10 Sekunden bis 20 Stunden.

In einer Ausführungsform der vorliegenden Erfindung kontaktiert man unmodifizierten Schaumstoff (a) mit wässriger Lösung von kationischem Polymer (b) bei einem pH-Wert im Bereich von 3,0 bis 7,5, wobei der gewünschte pH-Wert gegebenenfalls durch Zugabe von Säure, Lauge oder eines Puffers eingestellt werden kann. Die Verwendung eines Puffers wird bevorzugt.

In einer Ausführungsform der vorliegenden Erfindung kann man mindestens einen unmodifizierten Schaumstoff (a) nicht nur mit wässriger Formulierung von kationischem Polymer (b), sondern auch mit mindestens einem Zuschlagstoff (d) kontaktieren, gewählt aus

Bioziden, wie beispielsweise Silberpartikeln oder monomeren oder polymeren organischen Bioziden wie beispielsweise Phenoxyethanol, Phenoxypropanol, Glyoxal, Thiadiazine, 2,4-Dichlorbenzylalkohole und bevorzugt Isothiazolon-Derivate wie beispielsweise MIT (2-Methyl-3(2H)-isothiazolon), CMIT (5-Chlor-2-methyl-3(2H)-isothiazolon), CIT (5-Chlor-3(2H)-isothiazolon), BIT (1,2-Benzisothiazol-3(2H)-on), weiterhin Copolymere von N,N-Di-C₁-C₁₀-Alkyl-ω-amino-C₂-C₄-alkyl(meth)acrylat, insbesondere Copolymere von Ethylen mit N,N-Di-Methyl-2-aminoethyl(meth)acrylat,
Aktivkohle,
Farbmitteln wie beispielsweise Farbstoffen oder Pigmenten,
Riechstoffen wie beispielsweise Parfüm,
Geruchsfängern, beispielsweise Cyclodextrine.

Dazu kann man beispielsweise so vorgehen, dass man mindestens einen unmodifizierten Schaumstoff (a) in verschiedenen Arbeitsgängen oder vorzugsweise gleichzeitig mit wässriger Formulierung von kationischem Polymer (b) und mit mindestens einem Zuschlagstoff (d) kontaktiert.

In einer Ausführungsform der vorliegenden Erfindung kann man wässriger Formulierung von kationischem Polymer (b) einen oder mehrere Zuschlagstoffe (d) zusetzen, beispielsweise in Anteilen von 0 bis insgesamt 50 Gew.-%, bezogen auf (b), bevorzugt 0,001 bis 30 Gew.-%, besonders bevorzugt 0,01 bis 25 Gew.-%, ganz besonders bevorzugt 0,1 bis 20 Gew.-%.

Zur Herstellung von erfindungsgemäß verwendeten Formkörpern kann man weiterhin nach dem Einwirkenlassen von wässriger Formulierung von kationischem Polymer (b) und gegebenenfalls mindestens einem Zuschlagstoff (d) auf unmodifiziertem Schaumstoff (a) ein- oder mehrfach mechanisch komprimieren. Das mechanische Komprimieren kann man diskontinuierlich oder vorzugsweise kontinuierlich durchführen, diskontinuierlich beispielsweise durch Pressen oder Platten, kontinuierlich beispielsweise durch Walzen oder Kalander. Wenn man zu kalandrieren wünscht, so kann man einen oder mehrere Kalanderdurchgänge durchführen, beispielsweise einen bis zwanzig Kalanderdurchgänge, bevorzugt sind fünf bis zehn Kalanderdurchgänge.

In einer Ausführungsform der vorliegenden Erfindung komprimiert man mechanisch auf einen Verdichtungsgrad im Bereich von 1 : 1,2 bis 1 : 12, bevorzugt 1 : 2,5 bis 1 : 5.

In einer Ausführungsform der vorliegenden Erfindung kalandriert man vor dem Trocknen.

In einer Ausführungsform der vorliegenden Erfindung geht man so vor, dass man nach dem Kontaktieren und Einwirkenlassen von wässriger Formulierung von kationischem Polymer (b) und gegebenenfalls mindestens einem Zuschlagstoff (d) zunächst trocknet, danach mit Wasser befeuchtet und danach mechanisch komprimiert, beispielsweise kalandert.

In einer Ausführungsform der vorliegenden Erfindung kann man nach dem Kontaktieren und Einwirkenlassen von wässriger Formulierung von kationischem Polymer (b) und gegebenenfalls mindestens einem Zuschlagstoff (d) auf unmodifiziertem Schaumstoff (a) thermisch fixieren, und zwar vor oder nach dem mechanischen Komprimieren oder auch zwischen zwei mechanischen Kompressionsschritten. Man kann beispielsweise bei Temperaturen von 120 °C bis 250 °C über einen Zeitraum von 5 Sekunden bis 5 Minuten thermisch fixieren. Geeignete Apparaturen sind beispielsweise Mikrowellenöfen, Plattenpresswerke, mit Heißluftgebläsen, elektrisch oder mit Gasflammen beheizte Trockenschränke, beheizte Walzwerke oder kontinuierlich betriebene Trockeneinrichtungen.

Man kann vor dem thermischen Fixieren trocknen, wie vorstehend beschrieben.

In einer Ausführungsform der vorliegenden Erfindung kann man nach dem Kontaktieren und Einwirkenlassen von wässriger Formulierung von kationischem Polymer (b) und gegebenenfalls mindestens einem Zuschlagstoff (d) auf unmodifiziertem Schaumstoff (a) thermisch fixieren, und zwar nach oder vorzugsweise vor dem mechanischen Komprimieren oder auch zwischen zwei mechanischen Kompressionsschritten. Man kann beispielsweise bei Temperaturen von 150°C bis 200°C über einen Zeitraum von 30 Sekunden bis 5 Minuten thermisch fixieren. Geeignete Apparaturen sind beispielsweise Trockenschränke.

In einer speziellen Ausführungsform kombiniert man das mechanische Komprimieren und das thermische Fixieren, beispielsweise indem man Schaumstoff nach dem Einwirkenlassen und gegebenenfalls dem Trocknen ein- oder mehrfach über heiße Walzen oder Kalander führt oder ein- oder mehrfach zwischen heiße Platten presst. Natürlich kann man auch mehrfach kalandern und dabei ein- oder mehrfach mit kalten Walzen und ein- oder mehrfach mit heißen Walzen komprimieren. Unter heiß sollen im Zusammenhang mit der vorliegenden Erfindung Temperaturen im Bereich von 100 bis 250°C, bevorzugt 120 bis 200°C verstanden werden.

Weiterhin führt man mindestens einen formgebenden Schritt (c) durch. Dabei kann man das Kontaktieren mit wässriger Formulierung von mindestens einem kationischem Polymer (b) und den formgebenden Schritt (c) in beliebiger Reihenfolge durchführen. Dabei ist es bevorzugt, zunächst mit wässriger Formulierung von kationischem Polymer (b) zu kontaktieren und danach den formgebenden Schritt (c) durchzuführen.

In einer Ausführungsform der vorliegenden Erfindung führt man den formgebenden Schritt (c) mechanisch durch, beispielsweise durch Zermahlen, Schreddern, Granulieren, bevorzugt durch Zerreißen entsprechend größerer Teile, durch Stanzen oder durch Schneiden.

In einer anderen Ausführungsform der vorliegenden Erfindung stellt man unmodifizierten Schaumstoff (a) als Formkörper mit den eingangs definierten Abmessungen her, insbesondere kann man das Aufschäumen in Formen durchführen, so dass man Formkörper von unmodifziertem Schaumstoff (a) erhält, die man anschließend mit wässriger Formulierung von mindestens einem kationischem Polymer (b) kontaktiert.

Ein weiterer Gegenstand der vorliegenden Erfindung sind Formkörper, die im Folgenden auch als erfindungsgemäße Formkörper bezeichnet werden, erhältlich nach dem vorstehend beschriebenen Verfahren.

In einer Ausführungsform der vorliegenden Erfindung sind erfindungsgemäße Formkörper im wesentlichen aus offenzelligem Schaumstoff, d.h. solche Schaumstoffe, in denen mindestens 50% aller Lamellen offen sind, bevorzugt 60 bis 100% und besonders bevorzugt 65 bis 99,8%, bestimmt nach DIN ISO 4590.

Erfindungsgemäße Formkörper haben eine Dichte im Bereich von 5 bis 1.000 kg/m³, bevorzugt 6 bis 500 kg/m³ und besonders bevorzugt im Bereich von 7 bis 300 kg/m³. Die Dichte des erfindungsgemäßen Schaumstoffs wird einerseits durch den Grad der Belegung mit kationischem Polymer (b) und gegebenenfalls mindestens einem Zuschlagstoff (d) beeinflusst und andererseits durch den Verdichtungsgrad des Ausgangsmaterials. Durch geeignete Wahl von Belegungs- und Verdichtungsgrad lassen sich Dichte und Härte oder Flexibilität wie gewünscht einstellen.

Erfindungsgemäße Formkörper enthalten vorzugsweise im Bereich von 0,1 bis 95 Gew.-%, bevorzugt 5 bis 30 Gew.-%, besonders bevorzugt 10 bis 25 Gew.-%, bezogen auf das Gewicht des entsprechenden unmodifizierten Schaumstoffs (a), an Feststoff aus (b).

In einer Ausführungsform der vorliegenden Erfindung handelt es sich bei offenzelligen Schaumstoffen (a) um Schaumstoffe aus Aminoplastschaumstoff, bevorzugt um Melamin-Schaumstoff.

In einer Ausführungsform der vorliegenden Erfindung wählt man kationisches Polymer (b) aus Polyvinylaminen und Polyethyleniminen.

Erfindungsgemäße Formkörper lassen sich beispielsweise als Staubbindemittel verwenden.

Erfindungsgemäße Formkörper lassen sich insbesondere in Staubsaugern verwenden, insbesondere in sogenannten Bagless-Staubsaugern, beispielsweise als Staubbindemittel.

Staubbindemittel im Sinne der vorliegenden Erfindung vermögen, Grobstaub zu binden und vorzugsweise auch den in den Staubsauger eingesaugten Feinstaub, partiell oder vorzugsweise zum überwiegenden Anteil, beispielsweise mehr als 50 Gew.-%.

Zur Verwendung von erfindungsgemäßen Formkörpern als Staubbindemittel kann man beispielsweise wie folgt vorgehen:

Man stellt einen Staubsauger bereit, insbesondere einen Bagless-Staubsauger, der ein Staubsammelgefäß aufweist, das sich im Luftstrom befindet. Das Staubsammelgefäß kann beispielsweise als Zyklon ausgebildet sein.

Man dosiert in einer Ausführungsform der vorliegenden Erfindung mehrere Formkörper direkt in das Staubsammelgefäß. Zur Dosierung nutzt man eine oder mehrere Zugabevorrichtungen, die innerhalb des Staubsaugers oder in einem Saugvorsatz integriert sein kann oder als externe Apparatur mit einer Aufnahmevorrichtung für das Staubsammelgefäß ausgebildet sein kann. Man benötigt also keine weiteren Wirkelemente im Staubsauger. Die Zugabevorrichtung bzw. die Zugabevorrichtungen kann beispielsweise als Klappe, Kolben, Schnecke oder Düse ausgebildet sein. Die Zugabe von Staubbindemittel kann direkt oder über eine Schleuse erfolgen.

In einer anderen Ausführungsform gibt man erfindungsgemäße Formkörper direkt in das Staubsammelgefäß und setzt das Staubsammelgefäß zusammen mit den Formkörpern in den Staubsauger.

In einer anderen Ausführungsform der vorliegenden Erfindung dosiert man Formkörper automatisch in das Staubsammelgefäß. Dabei werden kontinuierlich gewisse Anteile an Staubbindemittel dosiert und kontinuierlich entsprechende Mengen nachdosiert. Eine derartige automatische Nachdosierung kann man zusätzlich staubmengenabhängig durchführen.

Staubsammelgefäße können je nach Staubsaugertyp beliebige Form und beliebige Größe aufweisen. So können Staubsammelgefäße im Sinne der vorliegenden Erfindung würfelförmig, zylinderförmig, kegelförmig oder unregelmäßig geformt sein. Beispiele für geeignete Volumina sind 0,1 dm³ bis 2 dm³, aber auch größere Volumina bis zu 10 dm³ sind denkbar.

Das Staubsammelgefäß kann beispielsweise als Beutel oder Tüte ausgebildet sein, als Kasten oder wie ein Zyklon (Fliehkraftabscheider). Der Füllstand des Staubsammelgefäßes kann beispielsweise elektronisch oder mechanisch überwacht werden, beispielsweise mit Sensoren.

In einer anderen Ausführungsform, insbesondere bei Bagless-Staubsaugern, die keine Tüte enthalten, kann das Staubsammelgefäß als Kasten oder wie ein Zyklon ausgebildet sein.

In einer Ausführungsform der vorliegenden Erfindung enthält das Staubsammelgefäß eine Vorrichtung zum Durchmischen, beispielsweise eine mechanische Vorrichtung wie beispielsweise einen Rührer, oder einen Motor, der das Staubsammelgefäß in Bewegung versetzt, beispielsweise in Schwingungen oder Drehungen. In einer anderen Ausführungsform der vorliegenden Erfindung enthält das Staubsammelgefäß keine Vorrichtung zum Durchmischen.

In einer anderen speziellen Ausführungsform der vorliegenden Erfindung kann man erfindungsgemäße Formkörper flächig ausgestalten, beispielsweise als Tuch oder Matte oder Vlieslage, welches als Filter dient, um den Luftstrom des Staubsaugers zu reinigen, bevor der Luftstrom den Staubsauger verlässt und wieder in die Umgebung geblasen wird. Erfindungsgemäße flächig ausgestaltete Formkörper können eine Dicke im Bereich von 0,3 bis 2 cm, bevorzugt 0,5 bis 1,5 cm haben. Dabei sind Länge und Breite von erfindungsgemäßen flächig ausgestalteten Formkörpern vorzugsweise deutlich größer als die Dicke, beispielsweise jeweils fünfmal so groß, bevorzugt mindestens zehnmal so groß. Länge und Breite können gleich oder verschieden groß sein.

In einer Ausführungsform der vorliegenden Erfindung weisen erfindungsgemäße flächige Formkörper eine Dicke im Bereich von 0,3 bis 2 cm, bevorzugt 0,5 bis 1,5 cm und eine Länge und Breite jeweils im Bereich von 150 bis 250 mm, bevorzugt 170 bis 230 mm auf.

Die Oberfläche von erfindungsgemäßen flächigen Formkörpern kann ohne weitere Veränderungen ausgestaltet sein oder aber plissiert.

Erfindungsgemäße flächige Formkörper können in erfindungsgemäßen Staubsaugern nach an sich bekannten Methoden fixiert werden, beispielsweise mit einem Filterrahmen oder in luftdurchlässigen oder luftundurchlässigen Staubsammelgefäßen Staubsammelgefäßen.

Erfindungsgemäße flächige Formkörper können in erfindungsgemäßen Staubsaugern beispielsweise als Tiefenfilter oder Flächenfilter eingesetzt werden oder - je nach Porendurchmesser - als Vorfilter oder Endfilter.

In einer Ausführungsform der vorliegenden Erfindung füllt man das Staubsammelgefäß zu 10 bis 60 Vol.-% mit erfindungsgemäßen Formkörpern, bevorzugt zu 25 bis 50 Vol.-%.

In einer Ausführungsform der vorliegenden Erfindung vermögen erfindungsgemäße Formkörper bis zu 3000 Gew.-% Staub zu binden, bezogen auf ihr eigenes Gewicht, beispielsweise 500 bis 3000 Gew.-%. Das Staubbindevermögen kann man beispielsweise gravimetrisch bestimmen.

Ein weiterer Gegenstand der vorliegenden Erfindung sind Staubsauger, insbesondere Bagless-Staubsauger, umfassend mindestens einen erfindungsgemäßen Formkörper. Ein weiterer Gegenstand der vorliegenden Erfindung sind Staubsauger, insbesondere Bagless-Staubsauger, umfassend mindestens einen erfindungsgemäßen flächigen Formkörper.

Bevorzugt sind Bagless-Staubsauger, umfassend mindestens einen erfindungsgemäßen Formkörper, im Folgenden auch als erfindungsgemäße Bagless-Staubsauger bezeichnet. Beim Betreiben des erfindungsgemäßen Bagless-Staubsaugers wird bzw. werden erfindungsgemäße Formkörper im Zyklon zusammen mit dem Staub verwirbelt. Der bzw. die erfindungsgemäßen Formkörper arbeiten in dieser Anwendung praktisch als Staubbindemittel (Staubfänger), insbesondere für u. U. allergieauslösenden Feinstaub. Durch das gemeinsame Verwirbeln von Staub und erfindungsgemäßem körper haften die Staubpartikel an erfindungsgemäßem Formkörper und sind demzufolge nicht mehr frei beweglich, d. h. sie können beim Ausleeren des Zyklons nicht mehr als Staubwolke aufwirbeln. Sie fallen stattdessen zusammen mit erfindungsgemäßem Formkörper auf den Boden. In dieser Anwendung kommen im wesentlichen die Oberflächeneigenschaften (Adsorption) der erfindungsgemäßen Formkörper zum Einsatz. Ihre vorteilhaften Filtereigenschaften sind in diesem Fall eher sekundär.

Des weiteren besteht die Möglichkeit, erfindungsgemäße Formkörper auch im oder als Feinstaubfilter zu verwenden, um dessen Standzeit zu verlängern; gleiches gilt für Staubbeutel.

Ein weiterer Gegenstand der vorliegenden Erfindung ist ein Verfahren zur Herstellung von Formkörpern, im Folgenden auch erfindungsgemäßes Herstellverfahren genannt, umfassend
(a) Bereitstellen eines offenzelligen Aminoplastschaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einem kationischen Polymer und
(c) Durchführen eines formgebenden Schrittes, durch den die betreffenden Formkörper Abmessungen im Bereich von Länge·Breite·Höhe jeweils im Bereich von 1 mm bis 5 cm, bevorzugt bis 3 cm,
wobei das Kontaktieren mit wässriger Formulierung von mindestens einem kationischem Polymer (b) und der formgebende Schritt (c) in beliebiger Reihenfolge durchgeführt werden können.
Ein weiterer Gegenstand der vorliegenden Erfindung ist ein Verfahren zur Herstellung von flächigen Formkörpern mit einer Dicke im Bereich von 0,3 bis 2 cm, bevorzugt 0,5 bis 1,5 cm, im Folgenden ebenfalls unter dem Begriff "erfindungsgemäßes Herstellverfahren" subsummiert, umfassend
(a) Bereitstellen eines offenzelligen Aminoplastschaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einem kationischen Polymer und
(c) Durchführen eines formgebenden Schrittes,
wobei das Kontaktieren mit wässriger Formulierung von mindestens einem kationischem Polymer (b) und der formgebende Schritt (c) in beliebiger Reihenfolge durchgeführt werden können.

Einzelheiten zum erfindungsgemäßen Herstellverfahren sind vorstehend aufgeführt.

Ein weiterer Gegenstand der vorliegenden Erfindung ist ein Verfahren zum Reinigen von Oberflächen, insbesondere Fußböden, unter Verwendung von erfindungsgemäßen Staubsaugern, im Folgenden auch erfindungsgemäßes Reinigungsverfahren genannt. Zur Durchführung des erfindungsgemäßen Reinigungsverfahrens kann man wie an sich bekannt vorgehen. Durch die Verwendung von einem oder mehreren erfindungsgemäßen Staubsauger(n) wird sehr reine Abluft produziert und nur wenig Feinstaub verwirbelt.

Die Erfindung wird durch Arbeitsbeispiele erläutert. In den Arbeitsbeispielen wurde jeweils mit Mineral-Teststaub "Schiefermehl" mit Korndurchmesserband < 200 µm und dem 50%-Wert < 30 µm getestet. Man kann jedoch auch anderen Staub einsetzen, zum Beispiel Hausstaub, Staub aus dem Garten, Sand, Mehl (Küchenstaub), Blütenpollen und Ruß.

### Arbeitsbeispiele

### I.1 Herstellung von unmodifiziertem Schaumstoff (a)

In einem offenen Gefäß wurde ein sprühgetrocknetes Melamin/Formaldehyd-Vorkondensat (Molverhältnis 1:3, Molekulargewicht etwa 500 g/mol) zu einer wässerigen Lösung mit 3 Gew.-% Ameisensäure und 1,5 % des Natriumsalzes eines Gemisches von Alkylsulfonaten mit 12 bis 18 C-Atomen im Alkylrest (Emulgator K 30 der Fa. Bayer AG), wobei die Prozentzahlen auf das Melamin/Formaldehyd-Vorkondensat bezogen sind, gegeben. Die Konzentration des Melamin/Formaldehyd-Vorkondensats, bezogen auf die gesamte Mischung aus Melamin/Formaldehyd-Vorkondensat und Wasser, betrug 74 Gew.-%. Die so erhältliche Mischung wurde kräftig gerührt, dann wurden 20 Gew.-% n-Pentan zugegeben. Es wurde so lange (etwa 3 min lang) weitergerührt, bis eine homogen aussehende Dispersion entstand. Diese wurde auf ein teflonisiertes Glasgewebe als Trägermaterial aufgerakelt und in einem Trockenschrank, in dem eine Lufttemperatur von 150°C herrschte, aufgeschäumt und gehärtet. Dabei stellte sich als Massetemperatur im Schaumstoff die Siedetemperatur des n-Pentans ein, die unter diesen Bedingungen bei 37,0 °C liegt. Nach 7 bis 8 min war die maximale Steighöhe des Schaumstoffs erreicht. Der Schaumstoff wurde noch weitere 10 min bei 150 °C im Trockenschrank belassen; anschließend wurde er 30 min lang bei 180° C getempert. Man erhielt unmodifizierten Schaumstoff (a.1).

Es wurden am unmodifizierten Schaumstoff (a.1) aus Beispiel I.1 die folgenden Eigenschaften ermittelt:
99,6% offenzellig nach DIN ISO 4590,
Stauchhärte (40%) 1,3 kPa bestimmt nach DIN 53577,
Dichte 7,6 kg/m³ bestimmt nach EN ISO 845,
mittlerer Porendurchmesser 210 µm, bestimmt durch Auswertung mikroskopischer Aufnahmen an Schnitten,
BET-Oberfläche von 6,4 m²/g, bestimmt nach DIN 66131,
Schallabsorption von 93 %, bestimmt nach DIN 52215,
Schallabsorption von mehr als 0,9, bestimmt nach DIN 52212.

### I.2 Herstellung von modifizierten Schaumstoffen

Man schnitt unmodifizierten Schaumstoff aus I.1 zu Schaumstoffquadern mit den Abmessungen 9 cm·4 cm·4 cm. Die Schaumstoffquader wogen im Bereich von 1,19 bis 1,34 g. Anschließend kontaktierte man mit einer 5 Gew.-% wässrigen Lösung von Polyvinylamin (b1.1) bis (b1.3) bzw. Polyethylenimin (b2.1) bis (b2.3), indem man je einen Schaumstoffquader vollständig in die wässrige Polymerlösungen (b1.1) bis (b1.3) bzw. (b2.1) bis (b2.3) (Tabelle 1) tauchte und 10 Sekunden in dieser wässrigen Polymerlösung bedeckt ließ. Anschließend entnahm man die Schaumstoffquader aus der betreffenden wässrigen Polymerlösung und quetschte die überschüssige Polymerlösung ab, indem man durch zwei sich gegenläufig drehende Walzen führte, die einen Durchmesser von 150 mm und einen Abstand von 5 mm aufwiesen und sich mit einer Geschwindigkeit von 32 Umdrehungen/min drehten.

Danach trocknete man über einen Zeitraum von 10 Stunden bei 60°C im Trockenschrank. Man erhielt erfindungsgemäße modifizierten Schaumstoffe S1.1 bis S1.3 sowie S2.1 bis S.2.3 (Tabelle 2)

**Tabelle 1. Kationische Polymere (b): Polyvinylamin (b1.1) bis (b1.3) bzw. Poylethylenimin (b2.1) bis (b2.3)**

| Polymere | M_{w} [g/mol] |
|---|---|
| (b1.1) | 32.000 |
| (b1.2) | 162.000 |
| (b1.3) | 1.123.00 |
| (b2.1) | 600 |
| (b2.2) | 70.000 |
| (b2.3) | 834.000 |

Die kationischen Polymere nach Tabelle 1 waren jeweils quantitativ mit HCI neutralisiert. (b1.1) bis (b1.3) war zu 95 mol-% hydrolysiertes Polyvinylamin (aus Poly-N-Vinylformamid)). Tabelle 2: Erfindungsgemäße modifizierte Schaumstoffe (Angabe in Gew.-% bezogen auf das Gewicht des unmodifizierten Schaumstoffs)

| Polymere | Erfindungsgemäßer modifizierter Schaumstoff Nr. | Gewicht unmodifizierter Schaumstoffquader [g] | Gewicht erfindungsgemäßer modifizierter Schaumstoff [g] | △ [Gew.-%] |
|---|---|---|---|---|
| (b1.1) | S1.1 | 1,19 | 1,37 | 15 |
| (b1.2) | S1.2 | 1,21 | 1,63 | 35 |
| (b1.3) | S1.3 | 1,25 | 1,76 | 41 |
| (b2.1) | S2.1 | 1,31 | 1,53 | 17 |
| (b2.2) | S2.2 | 1,21 | 1,60 | 32 |
| (b2.3) | S2.3 | 1,22 | 1,78 | 46 |

### II. Herstellung von erfindungsgemäßen Formkörpern

Aus einem Schaumstoffstück von S2.3, das als Matte mit einer Dicke von 3 cm ausgestaltet war, wurden mit Hammer und Henkellocheisen erfindungsgemäße Formkörper ausgestanzt:, Zylinder mit einem Durchmesser von 5 mm und einer Höhe von 1 cm (F.1) und Zylinder mit einem Durchmesser von 10 mm und einer Höhe von 3 cm (F.2).

### III. Verwendung als Staubbindemittel

Ein erfindungsgemäßer Formkörper gemäß II. und 40 g Mineral-Teststaub "Schiefermehl" wurde in einen Zyklon mit den Außen-Abmessungen (Höhe = 260 mm, Durchmesser = 150 mm) gefüllt und mit einem Luftstrom mit der Geschwindigkeit 20 m/s über einen Zeitraum von einer Minute verwirbelt. Dabei kollidierten die Mineral-Teststaubpartikel mit dem erfindungsgemäßen Formkörper und wurden adsorbiert. Anschließend wurde die Gewichtszunahme der mit Mineral-Teststaub beladenen erfindungsgemäßen Formkörper gravimetrisch ermittelt. Man fand, dass das Gewicht von erfindungsgemäßem Formkörper etwa um den Faktor 16 zugenommen hatte. Mittels Streulichtverfahren ließen sich weitere Aussagen machen bezüglich der Partikeldurchmesser von adsorbiertem Mineral-Teststaub und der chemischen Beschaffenheit (anorganische oder organische Natur). Erfindungsgemäße Formkörper zeigten ein ausgezeichnetes Staubbindevermögen beispielsweise im Vergleich zu Formkörpern aus nicht modifiziertem Schaumstoff (a.1) derselben Gestalt.

## Patentansprüche

1. Verwendung von Formkörpern mit Abmessungen Länge·Breite·Höhe jeweils im Bereich von 1 mm bis 5 cm, hergestellt durch Behandeln von
(a) offenzelligem Aminöplastschaumstoff mit einer Dichte im Bereich von 5 bis 500 kg/m³ und einem mittleren Porendurchmesser im Bereich von 1 µm bis 1 mm
(b) mit wässriger Formulierung von mindestens einem kationischen Polymer
(c) und einem formgebenden Schritt,
als Staubbindemittel in Staubsaugern.

2. Verwendung von flächigen Formkörpern mit einer Dicke im Bereich von 0,3 bis 2 cm, hergestellt durch Behandeln von
(a) offenzelligem Aminoplastschaumstoff mit einer Dichte im Bereich von 5 bis 500 kg/m³ und einem mittleren Porendurchmesser im Bereich von 1 µm bis 1 mm
(b) mit wässriger Formulierung von mindestens einem kationischen Polymer (c)und einem formgebenden Schritt,
als Staubbindemittel in Staubsaugern.

3. Verwendung nach Anspruch 1 oder 2, **dadurch gekennzeichnet, dass** man kationisches Polymer (b) wählt aus Polymeren, die mindestens eine primäre oder sekundäre oder tertiäre Aminogruppe pro Molekül aufweisen.

4. Verwendung nach einem der Ansprüche 1 bis 4, **dadurch gekennzeichnet, dass** es sich bei offenzelligen Aminoplastschaumstoffen (a) um Melaminschaumstoffe handelt.

5. Verwendung nach einem der Ansprüche 1 bis 4 , **dadurch gekennzeichnet, dass** man kationisches Polymer (b) wählt aus zumindest partiell neutralisierten Polyethyleniminen und Polyvinylaminen.

6. Verwendung nach einem der Ansprüche 1 bis 5 , **dadurch gekennzeichnet, dass** der formgebende Schritt (c) gewählt ist aus Zerreißen, Stanzen oder Schneiden.

7. Formkörper mit den Abmessungen Länge·Breite·Höhe jeweils im Bereich von 1 mm bis 5 cm, erhältlich durch
(a) Bereitstellen eines offenzelligen Aminoplastschaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einem kationischen Polymer
(c) und einem formgebenden Schritt,
wobei das Kontaktieren mit wässriger Formulierung von mindestens einem kationischen Polymer (b) und der formgebende Schritt (c) in beliebiger Reihenfolge durchgeführt werden können.

8. Flächige Formkörper mit einer Dicke im Bereich von 0,3 bis 2 cm, hergestellt durch Behandeln von
(a) offenzelligem Aminoplastschaumstoff mit einer Dichte im Bereich von 5 bis 500 kg/m³ und einem mittleren Porendurchmesser im Bereich von 1 µm bis 1 mm
(b) mit wässriger Formulierung von mindestens einem kationischen Polymer
(c) und einem formgebenden Schritt,
wobei das Kontaktieren mit wässriger Formulierung von mindestens einer Verbindung mit mindestens einem kationischen Polymer (b) und der formgebende Schritt (c) in beliebiger Reihenfolge durchgeführt werden können.

9. Formkörper Anspruch 7 oder 8, **dadurch gekennzeichnet, dass** es sich bei offenzelligen Aminoplastschaumstoffen (a) um Melamin-Schaumstoffe handelt.

10. Formkörper nach einem der Ansprüche 7 bis 9, **dadurch gekennzeichnet, dass** man kationisches Polymer (b) wählt aus zumindest partiell neutralisierten Polyethyleniminen und Polyvinylaminen.

11. Verwendung von Formkörpern nach einem der Ansprüche 7 bis 10 als Staubbindemittel.

12. Verwendung von Formkörpern nach einem der Ansprüche 8 bis 10 in Staubsaugern.

13. Staubsauger, umfassend mindestens einen Formkörper nach einem der Ansprüche 7 bis 10.

14. Verfahren zur Herstellung von Formkörpern, umfassend
(a) Bereitstellen eines offenzelligen Aminoplastschaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einem kationischen Polymer und
(c) Durchführen eines formgebenden Schrittes, durch den die betreffenden Formkörper Abmessungen im Bereich von Länge·Breite·Höhe jeweils im Bereich von 1 mm bis 5 cm erhalten,
wobei das Kontaktieren mit wässriger Formulierung von mindestens einem kationischen Polymer (b) und der formgebende Schritt (c) in beliebiger Reihenfolge durchgeführt werden können.

15. Verfahren zur Herstellung von flächigen Formkörpern mit einer Dicke im Bereich von 0,3 bis 2 cm, umfassend
(a) Bereitstellen eines offenzelligen Aminoplastschaumstoffs mit einer Dichte im Bereich von 5 bis 500 kg/m³ und einem mittleren Porendurchmesser im Bereich von 1 µm bis 1 mm,
(b) Kontaktieren mit wässriger Formulierung von mindestens einem kationischen Polymer und
(c) Durchführen eines formgebenden Schrittes,
wobei das Kontaktieren mit wässriger Formulierung von mindestens einem kationischen Polymer (b) und der formgebende Schritt (c) in beliebiger Reihenfolge durchgeführt werden können.

16. Verfahren zur Reinigung von Oberflächen unter Verwendung von mindestens einem Staubsauger nach Anspruch 13.

17. Verfahren nach Anspruch 16, **dadurch gekennzeichnet, dass** es sich bei Oberflächen um Fußböden handelt.

## Claims

1. The use of moldings whose length · width · height dimensions are always in the range from 1 mm to 5 cm, produced by treatment of
(a) open-cell aminoplastic foam whose density is in the range from 5 to 500 kg/m³ and whose average pore diameter is in the range from 1 µm to 1 mm
(b) with an aqueous formulation of at least one cationic polymer
(c) and a shaping step,
as dust binders in vacuum cleaners.

2. The use of sheet-like moldings whose thickness is in the range from 0.3 to 2 cm, produced by treatment of
(a) open-cell aminoplastic foam whose density is in the range from 5 to 500 kg/m³ and whose average pore diameter is in the range from 1 µm to 1 mm
(b) with an aqueous formulation of at least one cationic polymer
(c) and a shaping step,
as dust binders in vacuum cleaners.

3. The use according to claim 1 or 2, wherein cationic polymer (b) is selected from polymers which have at least one primary or secondary or tertiary amino group per molecule.

4. The use according to any of claims 1 to 4, wherein open-cell aminoplastic foams (a) involve melamine foams.

5. The use according to any of claims 1 to 4, wherein cationic polymer (b) is selected from at least partially neutralized polyethyleneimines and polyvinylamines.

6. The use according to any of claims 1 to 5, wherein the shaping step (c) has been selected from lacerating, stamping, and cutting.

7. A molding whose length · width · height dimensions are always in the range from 1 mm to 5 cm, obtainable by
(a) provision of an open-cell aminoplastic foam whose density is in the range from 5 to 500 kg/m³, and whose average pore diameter is in the range from 1 µm to 1 mm,
(b) contact with an aqueous formulation of at least one cationic polymer
(c) and a shaping step,
where the contact with an aqueous formulation of at least one cationic polymer (b) and the shaping step (c) can be carried out in any desired sequence.

8. A flat molding whose thickness is in the range from 0.3 to 2 cm, produced by treatment of
(a) open-cell aminoplastic foam whose density is in the range from 5 to 500 kg/m³ and whose average pore diameter is in the range from 1 µm to 1 mm
(b) with an aqueous formulation of at least one cationic polymer
(c) and a shaping step,
where the contact with an aqueous formulation of at least one compound with at least one cationic polymer (b) and the shaping step (c) can be carried out in any desired sequence.

9. The molding claim 7 or 8, wherein open-cell aminoplastic foams (a) involve melamine foams.

10. The molding according to any of claims 7 to 9, wherein cationic polymer (b) is selected from at least partially neutralized polyethyleneimines and polyvinylamines.

11. The use of moldings according to any of claims 7 to 10 as dust binders.

12. The use of moldings according to any of claims 8 to 10 in vacuum cleaners.

13. A vacuum cleaner, comprising at least one molding according to any of claims 7 to 10.

14. A process for the production of moldings, comprising
(a) provision of an open-cell aminoplastic foam whose density is in the range from 5 to 500 kg/m³, and whose average pore diameter is in the range from 1 µm to 1 mm,
(b) contact with an aqueous formulation of at least one cationic polymer, and
(c) carrying out a shaping step, by which the relevant moldings obtain length · width · height dimensions that are always in the range from 1 mm to 5 cm,
where the contact with an aqueous formulation of at least one cationic polymer (b) and the shaping step (c) can be carried out in any desired sequence.

15. A process for the production of sheet-like moldings whose thickness is in the range from 0.3 to 2 cm, comprising
(a) provision of an open-cell aminoplastic foam whose density is in the range from 5 to 500 kg/m³, and whose average pore diameter is in the range from 1 µm to 1 mm,
(b) contact with an aqueous formulation of at least one cationic polymer, and
(c) carrying out a shaping step,
where the contact with an aqueous formulation of at least one cationic polymer (b) and the shaping step (c) can be carried out in any desired sequence.

16. A process for the cleaning of surfaces, using at least one vacuum cleaner according to claim 13.

17. The process according to claim 16, wherein surfaces involve floors.

## Revendications

1. Utilisation de corps moulés de dimensions longueur-largeur-hauteur chacune dans la plage de 1 mm à 5 cm, produits par traitement de
(a) mousse aminoplaste à cellules ouvertes, ayant une densité dans la plage de 5 à 500 kg/m³ et un diamètre moyen de pore dans la plage de 1 µm à 1 mm
(b) par une composition aqueuse d'au moins un polymère cationique
(c) et une étape de formage,
en tant que fixateur de poussière dans des aspirateurs.

2. Utilisation de corps moulés plats ayant une épaisseur dans la plage de 0,3 à 2 cm, produits par traitement de
(a) mousse aminoplaste à cellules ouvertes, ayant une densité dans la plage de 5 à 500 kg/m³ et un diamètre moyen de pore dans la plage de 1 µm à 1 mm
(b) par une composition aqueuse d'au moins un polymère cationique
(c) et une étape de formage,
en tant que fixateur de poussière dans des aspirateurs.

3. Utilisation selon la revendication 1 ou 2, **caractérisée en ce qu'**on choisit le polymère cationique (b) parmi des polymères qui comportent au moins un groupe amino primaire ou secondaire ou tertiaire par molécule.

4. Utilisation selon l'une quelconque des revendications 1 à 4, **caractérisée en ce que** les mousses aminoplaste à cellules ouvertes (a) consistent en des mousses mélamine.

5. Utilisation selon l'une quelconque des revendications 1 à 4, **caractérisée en ce qu'**on choisit le polymère cationique (b) parmi des polyvinylamines et polyéthylène-imines au moins partiellement neutralisées.

6. Utilisation selon l'une quelconque des revendications 1 à 5, **caractérisée en ce que** l'étape de formage (c) est choisie parmi la cassure, le poinçonnage et le découpage.

7. Corps moulé ayant les dimensions longueur-largeur-hauteur chacune dans la plage de 1 mm à 5 cm, pouvant être obtenu par
(a) production d'une mousse aminoplaste à cellules ouvertes, ayant une densité dans la plage de 5 à 500 kg/m³ et un diamètre moyen de pore dans la plage de 1 µm à 1 mm,
(b) mise en contact avec une composition aqueuse d'au moins un polymère cationique
(c) et une étape de formage,
la mise en contact avec la composition aqueuse d'au moins un polymère cationique (b) et l'étape de formage (c) pouvant être effectuées en un ordre quelconque.

8. Corps moulé plat ayant une épaisseur de 0,3 à 2 cm, produit par traitement de
(a) mousse aminoplaste à cellules ouvertes, ayant une densité dans la plage de 5 à 500 kg/m³ et un diamètre moyen de pore dans la plage de 1 µm à 1 mm
(b) par une composition aqueuse d'au moins un polymère cationique
(c) et une étape de formage,
la mise en contact avec la composition aqueuse d'au moins un composé avec au moins un polymère cationique (b) et l'étape de formage (c) pouvant être effectuées en un ordre quelconque.

9. Corps moulé revendication 7 ou 8, **caractérisé en ce que** les mousses aminoplaste (a) consistent en des mousses mélamine.

10. Corps moulé selon l'une quelconque des revendications 7 à 9, **caractérisé en ce qu'**on choisit le polymère cationique (b) parmi des polyvinylamines et polyéthylène-imines au moins partiellement neutralisées.

11. Utilisation de corps moulés selon l'une quelconque des revendications 7 à 10, en tant que fixateur de poussière.

12. Utilisation de corps moulés selon l'une quelconque des revendications 8 à 10, dans des aspirateurs.

13. Aspirateur, comprenant au moins un corps moulé selon l'une quelconque des revendications 7 à 10.

14. Procédé pour la production de corps moulés, comprenant
(a) la production d'une mousse aminoplaste à cellules ouvertes, ayant une densité dans la plage de 5 à 500 kg/m³ et un diamètre moyen de pore dans la plage de 1 µm à 1 mm,
(b) la mise en contact avec une composition aqueuse d'au moins un polymère cationique et
(c) l'exécution d'une étape de formage, par laquelle les corps moulés concernés acquièrent des dimensions en longueur-largeur-hauteur chacune dans la plage de 1 mm à 5 cm,
la mise en contact avec la composition aqueuse d'au moins un polymère cationique (b) et l'étape de formage (c) pouvant être effectuées en un ordre quelconque.

15. Procédé pour la production de corps moulés plats ayant une épaisseur de 0,3 à 2 cm, comprenant
(a) la production d'une mousse aminoplaste à cellules ouvertes, ayant une densité dans la plage de 5 à 500 kg/m³ et un diamètre moyen de pore dans la plage de 1 µm à 1 mm,
(b) la mise en contact avec une composition aqueuse d'au moins un polymère cationique et
(c) l'exécution d'une étape de formage,
la mise en contact avec la composition aqueuse d'au moins un polymère cationique (b) et l'étape de formage (c) pouvant être effectuées en un ordre quelconque.

16. Procédé pour le nettoyage de surfaces avec utilisation d'au moins un aspirateur selon la revendication 13.

17. Procédé selon la revendication 16, **caractérisé en ce que** les surfaces consistent en des sols.
